(19)
Europäisches
Patentamt
European
Patent Office
Office européen
des brevets

(11) **EP 3 106 712 B1**

(12) **EUROPEAN PATENT SPECIFICATION**

(45) Date of publication and mention
of the grant of the patent:
**24.10.2018 Bulletin 2018/43**

(51) Int Cl.:
*F16G 5/20* (2006.01)    *F16G 5/06* (2006.01)
*F16G 5/08* (2006.01)

(21) Application number: **14882232.3**

(86) International application number:
**PCT/JP2014/006009**

(22) Date of filing: **02.12.2014**

(87) International publication number:
**WO 2015/121907 (20.08.2015 Gazette 2015/33)**

(54) **DOUBLE-COGGED V-BELT**

DOPPELT GEZAHNTER KEILRIEMEN

COURROIE EN V DENTÉE DOUBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2014   JP 2014026887**

(43) Date of publication of application:
**21.12.2016   Bulletin 2016/51**

(73) Proprietors:
• **Bando Chemical Industries, Ltd.
Kobe-shi, Hyogo 650-0047 (JP)**
• **Honda Motor Company Limited
Tokyo 107-8556 (JP)**

(72) Inventors:
• **MATSUO, Keiichiro
Kobe-shi
Hyogo 650-0047 (JP)**

• **KOMURO, Hirokazu
Wako-shi
Saitama 351-0193 (JP)**
• **ASUMI, Michio
Wako-shi
Saitama 351-0193 (JP)**

(74) Representative: **Delorme, Nicolas et al
Cabinet Germain & Maureau
BP 6153
69466 Lyon Cedex 06 (FR)**

(56) References cited:
JP-A- 2004 036 855     JP-A- 2004 353 757
JP-A- 2004 353 757     JP-A- 2007 009 966
JP-A- 2013 127 278     US-A1- 2009 011 883

EP 3 106 712 B1

**Description**

TECHNICAL FIELD

The present disclosure relates to a double-cogged V-belt.

BACKGROUND ART

A rubber belt has been used in a continuously variable transmission of two wheelers (scooters). A belt used in a transmission is required to have high flex resistance, and high transmission efficiency to meet demands for reduced fuel consumption as well.

As an exemplary belt having both high flex resistance and high transmission efficiency, a double-cogged V-belt having cogs arranged at a predetermined pitch on the outer and inner peripheral surfaces thereof (see, e.g., Patent Document 1) has attracted a lot of attention recently. Provision of the cogs on the inner peripheral surface of the belt may reduce bending rigidity of the belt, self-heating of the belt, and bending strain of the belt so much as to decrease the frequency of occurrence of cracks. Further, provision of the cogs on the outer peripheral surface of the belt may prevent buckling distortion of the belt due to a lateral pressure. Thus, the double-cogged V-belt may have both high flex resistance and high transmission efficiency.

CITATION LIST

PATENT DOCUMENT

[Patent Document 1] Japanese Unexamined Patent Publication No. 2004-36855

SUMMARY OF THE INVENTION

TECHNICAL PROBLEM

However, the conventional double-cogged V-belt has the following problems. A belt is worn as it is used. As the belt is worn, a winding diameter of the belt varies, and thus a transmission ratio changes as well. If the hardness of the rubber used is increased to reduce the wear of the belt, the transmission efficiency decreases, and the features as the double-cogged V-belt cannot be provided. This problem is particularly significant in a belt with a reduced diameter and a narrowed width to cope with the recent size reduction of the scooters. Such a double-cogged V-belt is known from JP2004036855.

It is therefore an object of the present disclosure to provide a double-cogged V-belt in which variations in transmission ratio are reduced without decreasing the transmission efficiency.

SOLUTION TO THE PROBLEM

An exemplary embodiment of a double-cogged V-belt of the present disclosure includes: an endless cord-embedded portion having a cord embedded therein; a lower cogged portion forming an integral part of the cord-embedded portion on an inner peripheral surface thereof; and an upper cogged portion forming an integral part of the cord-embedded portion on an outer peripheral surface thereof. The cord causes a shrinkage of 1.2 % to 2.0 % when subjected to a thermal treatment at 120 °C for an hour, and a rubber composition constituting the lower and upper cogged portions has a hardness of less than 90 degrees.

In the exemplary embodiment of the double-cogged V-belt, the cord may be a polyester fiber.

ADVANTAGES OF THE INVENTION

According to the double-cogged V-belt of the present disclosure, the variations in transmission ratio may be reduced without decreasing the transmission efficiency.

BRIEF DESCRIPTION OF THE DRAWINGS

[FIG. 1] FIG. 1 is a perspective view illustrating a double-cogged V-belt according to an embodiment.

[FIG. 2] FIGS. 2(a) and 2(b) illustrate the double-cogged V-belt according to an embodiment, wherein FIG. 2(a) is a cross-sectional view taken along the length of the belt, and FIG. 2(b) is a cross-sectional view taken along the width of the belt.

DESCRIPTION OF EMBODIMENTS

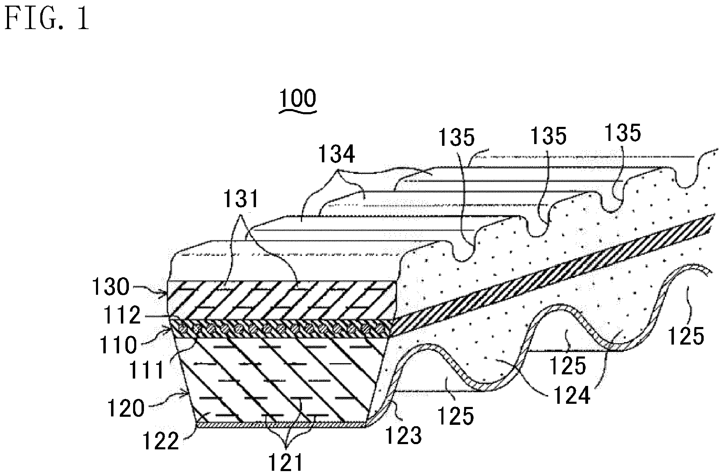

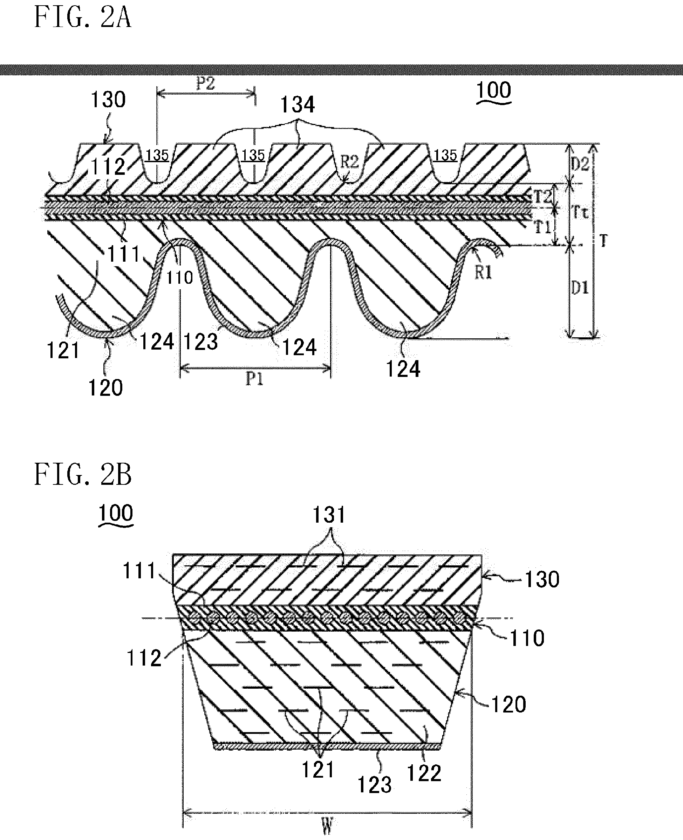

As shown in FIGS. 1, 2(a) and 2(b), a double-cogged V-belt 100 according to an embodiment of the present disclosure includes an endless cord-embedded portion 110, a lower cogged portion 120 forming an integral part of the cord-embedded portion 110 on an inner peripheral surface thereof, and an upper cogged portion 130 forming an integral part of the cord-embedded portion 110 on an outer peripheral surface thereof.

The cord-embedded portion 110 includes a cord-embedded portion body 111 made of a rubber composition, and a cord 112 embedded therein to be helically arranged at a predetermined pitch in a belt width direction. A rubber component in the rubber composition constituting the cord-embedded portion body 111 may be, for example, chloroprene rubber (CR), ethylene propylene diene terpolymer rubber (EPDM), alkylated chlorosulfonated polyethylene rubber (ACSM), or hydrogen added NBR (H-NBR).

The cord 112 causes a shrinkage of 1.2 % to 2.0 % when subjected to a thermal treatment at 120°C for an hour. The cord 112 may be made of polyester, for example. For instance, a cord having a predetermined outer diameter d (e.g., d = 0.8-1.5 mm) may be used by immersing twisted polyester (e.g., polyethylene terephthalate (PET)) fiber yarns of 6000 dtex or more in thickness in an aqueous solution of resorcin, formalin and latex, and then subjecting the yarns thus obtained to a bonding process by drying. The shrinkage of the cord 112 may be measured by a method to be described later with reference to Examples.

The lower cogged portion 120 includes a lower cogged portion body 122 made of a rubber composition, and canvas 123 bonded to the surface of the lower cogged portion 120. A rubber component of the rubber composition constituting the lower cogged portion 120 may be, for example, chloroprene rubber (CR), ethylene propylene diene terpolymer rubber (EPDM), alkylated chlorosulfonated polyethylene rubber (ACSM), or hydrogen added NBR (H-NBR). The lower cogged portion 120 may have a thickness of 5.0 mm to 8.0 mm.

The rubber composition constituting the lower cogged portion 120 contains short fibers 121. The short fibers 121 are oriented such that their grain direction agrees with the belt width direction, and are mixed with, and dispersed in, the rubber composition. The rubber composition constituting the lower cogged portion 120 may have a hardness (JIS-A hardness) of 80 degrees or more and less than 90 degrees.

The short fibers 121 may be fibers having a tensile modulus of elasticity of 5 GPa or more. Examples of the short fibers include high-strength polyvinyl alcohol (PVA) fibers, para-aramid fibers, meta-aramid fibers, aromatic polyester fibers, and heterocycle-containing aromatic fibers. Among these fibers, para-aramid fibers (e.g., Kevlar 29 and Kevlar 119 (product names) manufactured by Du Pont and Technora (product name) manufactured by Teijin) and meta-aramid fibers (e.g., Conex (product name) manufactured by Teijin) may suitably be used because these fibers are not easily torn when they are kneaded into a rubber component, and the modulus of elasticity may be increased by adding a small amount of these fibers. The amount of the short fibers 121 may be 15 to 25 parts by mass relative to 100 parts by mass of the rubber component. The canvas 123 may be obtained by immersing, in a rubber cement, an elastic woven fabric made of nylon fibers, cotton, a fiber blend of nylon fibers and cotton, a fiber blend of cotton and polyester fibers, aramid fibers or any other suitable materials, and then bonding the product thus obtained by drying.

A rubber composition constituting the upper cogged portion 130 may be made of, for example, chloroprene rubber (CR), ethylene propylene diene terpolymer rubber (EPDM), alkylated chlorosulfonated polyethylene rubber (ACSM), or hydrogen added NBR (H-NBR). The upper cogged portion 130 may have a thickness of 1.5 mm to 3.5 mm. The rubber composition constituting the upper cogged portion 130 contains short fibers 131. The short fibers 131 are oriented such that their grain direction agrees with the belt width direction, and are mixed with, and dispersed in, the rubber composition. The rubber composition constituting the upper cogged portion 130 may have a hardness (JIS-A hardness) of 80 degrees or more and less than 90 degrees.

The short fibers 131 may be fibers having a tensile modulus of elasticity of 5 GPa or more. Examples of the short fibers include high-strength polyvinyl alcohol (PVA) fibers, para-aramid fibers, meta-aramid fibers, aromatic polyester fibers, and heterocycle-containing aromatic fibers. Among these fibers, para-aramid fibers (e.g., Kevlar 29 and Kevlar 119 (product names) manufactured by Du Pont and Technora (product name) manufactured by Teijin) and meta-aramid fibers (e.g., Conex (product name) manufactured by Teijin) may suitably be used because these fibers are not easily torn when they are kneaded into a rubber component, and the modulus of elasticity may be increased by adding a small amount of these fibers. The amount of the short fibers 131 may be 15 to 25 parts by mass relative to 100 parts by mass of the rubber component. The upper cogged portion 130 configured in this manner may ensure the strength high enough to reduce buckling of the belt under the lateral pressure applied by a pulley, and provide the belt with high transmission efficiency.

In the double-cogged V-belt 100 of the present embodiment, the cord 112 causes a shrinkage of 1.2 % to 2.0 % when subjected to a treatment at 120 °C for an hour. Thus, the diameter of the belt may be reduced so as to follow the variation in diameter due to the wear of the belt. This may maintain the winding diameter almost constant, thus minimizing the variation in transmission ratio. Further, the rubber composition constituting the lower and upper cogged portions 120 and 130 has a hardness (JIC-A hardness) of less than 90 degrees, which is lower than the hardness of conventional double-cogged V-belts. Therefore, energy loss due to bending of the belt may be reduced, and the transmission efficiency may be improved.

The shrinkage of the cord 112 caused when subjected to a thermal treatment at 120°C for an hour may be 1.2 % or more, advantageously 1.5 % or more, in order to reduce the belt diameter sufficiently. Further, the shrinkage may be 2.0 % or less to avoid the breakage of the belt due to the shrink of the cord 112. The shrinkage of the cord 112 may be varied depending on various conditions including the material, thickness, and twisting method of the cord. The shrinkage may also be varied depending on the conditions for a bonding process to be performed on the cord 112, for example.

It is recommended that the rubber composition constituting the lower and upper cogged portions 120 and 130 have a hardness (JIC-A hardness) of less than 90 degrees so as to keep the modulus of elasticity low and reduce the energy loss due to the bending of the belt. Further, it is beneficial that the hardness is 80 degrees or more so as to reduce the wear of the belt.

The lower cogged portion 120 has lower cogs 124 arranged at a fixed pitch PI (e.g., PI = 6 mm) in a belt length direction, and a groove 125 extending in the belt width direction is arranged between each adjacent pair of the lower cogs 124. When viewed in a cross section taken along the length of the belt, the lower cogs 124 may have a substantially sinusoidal wave shape and a cog height D1 of 4 mm-6 mm, and the grooves 125 may have an arcuate bottom having a radius R1 (e.g., R1 = 2.0 mm) and recessed. With the cog height D1 of the lower cogs 124 set to be 4 mm to 6 mm, the bending rigidity of the belt may be reduced, the quantity of heat generated by the belt may also be reduced, and the bending strain that the belt receives may be reduced as well. This may reduce the frequency of occurrence of cracks sufficiently. Further, this may prevent adverse effects on the durability of the belt due to a variation in tension caused by the oscillation of the lower cogs 124 when rotation fluctuation occurs.

The upper cogged portion 130 has upper cogs 134 arranged at a fixed pitch P2 (e.g., P2 = 6 mm) in the belt length direction, and a groove 135 extending in the belt width direction is arranged between each adjacent pair of the upper cogs 134. When viewed in a cross section taken along the length of the belt, the upper cogs 134 may have a substantially trapezoidal shape and a predetermined cog height D2 (e.g., D2 = 2.2 mm), and the grooves 135 may have an arcuate bottom having a radius R2 (e.g., R2 = 1.2 mm) and recessed.

The arrangement pitch PI of the lower cogs 124 may be set to be not more than the arrangement pitch P2 of the upper cogs 134. Further, the ratio D1/D2 of the cog height D1 of the lower cogs 124 to the cog height D2 of the upper cogs 134 may be 1.7 or more. In addition, the ratio T/TC of the thickness T of the belt to the distance TC between the bottom of each groove 125 of the lower cogged portion 120 and the bottom of the associated groove 135 of the upper cogged portion 130 may be 1.5 or more. Note that the distance TC is the sum of the distance T1 from the bottom of each groove 125 of the lower cogged portion 120 to the middle of the cord 112 and the distance T2 from the bottom of each groove 135 of the upper cogged portion 130 to the middle of the cord 112. With these geometric parameters met, the double-cogged V-belt 100 of the present embodiment may be provided with good resistance to lateral pressure and good flex resistance. In addition, by setting the ratio of a belt width W measured at a position corresponding to the middle of the cord 112 in the belt thickness direction to the belt thickness T to be 1.5 or more, an aspect ratio appropriate for a variable speed belt may be satisfied. Further, with the ratio of the belt width W to the belt thickness T set to be 4.0 or less, the buckling distortion of the belt in the belt width direction caused by the lateral pressure may be reduced, and thus a variable speed belt having high transmission efficiency may be provided.

[Examples]

<Rubber Composition>

-Rubber Composition 1-

Chloroprene rubber (CR) was put into, and kneaded in, an internal mixer together with 48 parts by mass of carbon black, 5 parts by mass of magnesium oxide, 5 parts by mass of zinc oxide, 2.5 parts by mass of an antioxidant, 9 parts by mass of a processing aid and a plasticizer relative to 100 parts by mass of chloroprene rubber (CR), and then the product thus obtained was measured and divided. Then, to this kneaded product, 3 parts by mass of a crosslinking promoter and 20 parts by mass of meta-aramid short fibers having a fiber length of 3 mm (Conex manufactured by Teijin), relative to 100 parts by mass chloroprene rubber (CR), were added and kneaded together to form a block of Rubber Composition 1. This Rubber Composition 1 had a hardness (JIS-A hardness) of 85 degrees. The hardness was measured using a JIS-A hardness tester.

-Rubber Composition 2-

Rubber Composition 2 was prepared in the same manner as Rubber Composition 1 except that the amount of the short fibers was changed to 25 parts by mass. The rubber composition 2 had a hardness (JIS-A hardness) of 90 degrees.

<Cord>

-Cord 1-

Two polyester fibers of 1100 dtex in thickness were primarily twisted at a primary twist coefficient of 2.6, and five primarily-twisted yarns were secondarily twisted in the opposite direction to the primary twist direction at a secondary twist coefficient of 2.9 to obtain Cord 1 of 11000 dtex in total thickness. This Cord 1 was RFL (resorcin, formaldehyde, latex)-treated for use.

-Cord 2-

Two para-aramid fibers of 1650 dtex in thickness (Technora (product name) manufactured by Teijin) were primarily twisted at a primary twist coefficient of 4.3, and three primarily-twisted yarns were secondarily twisted in the opposite direction to the primary twist direction at a secondary twist coefficient of 3.6 to obtain Cord 2 of 9900 dtex in total thickness.

<Belt>

-Belt 1-

Rubber Composition 1 was rolled to a thickness of 0.7 mm using a calendar roll to have the short fibers oriented in the length direction. Then, the product thus obtained was cut into pieces with a predetermined length, and those pieces were joined together into a sheet so that the short fibers were oriented in the width direction of the sheet. The sheet of Rubber Composition 1 including the short fibers oriented in the width direction, Cord 1, and flexible nylon canvas were placed on a cylindrical mold to obtain a cylindrical slab on an outer peripheral surface of the cylindrical mold by molding and vulcanization. The product thus obtained was then cut into a belt with a predetermined width. Then, the belt was cut and polished such that the belt would form a wedge angle of 32° when viewed in cross-section taken along the width of the belt. Belt 1 thus obtained had a belt thickness T of 11.5 mm, a belt width W of 20.0 mm as measured at a position corresponding to the middle of the cord in the belt thickness direction, an arrangement pitch PI of 10.0 mm between the lower cogs, and an arrangement pitch P2 of 5.7 mm between the upper cogs. When viewed in cross section, the bottom of the groove of the lower cogged portion had a radius R1 of 1.5 mm, and the bottom of the groove of the upper cogged portion had a radius R2 of 1.0 mm. The lower cogs had a cog height D1 of 4.5 mm, and the upper cogs had a cog height D2 of 2.0 mm. The distance T1 from the bottom of the groove of the lower cogged portion to the middle of the cord was 3.6 mm, and the distance T2 from the bottom of the groove of the upper cogged portion to the middle of the cord was 1.8 mm.

-Belt 2-

Belt 2 was formed in the same manner as Belt 1 except that Rubber Composition 2 was used.

-Belt 3-

Belt 3 was formed in the same manner as Belt 1 except that Rubber Composition 2 and Cord 2 were used.

<Evaluation>

-Shrinkage-

A belt having the cord embedded therein was thermally treated at 120 °C for an hour. The outer circumferential length of the belt was measured before and after the thermal treatment, and a value representing the shrinkage of the cord was obtained by dividing the difference between the outer circumferential lengths measured before and after the thermal treatment by the outer circumferential length measured before the thermal treatment.

-Transmission Efficiency-

With the belt wrapped around a drive pulley and a driven pulley, the drive pulley was rotated at 3000 rpm to measure the transmission efficiency. In measuring the transmission efficiency, the drive and driven pulleys of the same diameter were used, and a drive shaft was rotated at a torque of 4 Nm. Input number of revolutions N1, input torque Tr1, output number of revolutions N2 and output torque Tr2 were measured at that time, and applied to the following Equation (1) to calculate the transmission efficiency.

$$\text{Transmission efficiency} = (N2 \times Tr2) / (N1 \times Tr1) \times 100 \cdots (1)$$

A value representing a normalized efficiency was obtained by dividing the difference between the transmission efficiency of the belt thus obtained and the transmission efficiency of the belt 3 by the transmission efficiency of the belt 3.

-Rate of Change of Ratio-

The rate of change of ratio was measured in the following manner. The belt was wrapped around a drive pulley and a driven pulley, and the drive pulley was rotated at 5000 rpm and a drive torque of 8 Nm for 200 hours. Input and output numbers of revolutions N1 and N2 immediately after the start of the rotation and input and output numbers of revolutions N3 and N4 when 200 hours passed since the start of rotation were measured, and applied to the following Equation (2) to calculate the rate of change of ratio.

$$\text{Rate of Change of Ratio}$$

$$= N1/N2((N3/N4)-(N1/N2))/(N1/N2)\times100 \cdots (2)$$

In Belt 1 provided as a combination of Rubber Composition 1 having a hardness of 85 degrees and Cord 1, the cord had a shrinkage of 1.5 %. Further, the rate of change of ratio was 1.0 %, which indicates that the transmission ratio hardly changed and was stable. The normalized efficiency was +2 %, which indicates that the transmission efficiency was improved as compared with Belt 3. In Belt 2 provided as a combination of Rubber Composition 2 having a hardness of 90 degrees and Cord 1, the cord had a shrinkage of 1.2 %. Further, the rate of change of ratio was 1.0 %, which indicates that the change in transmission ratio was minimized. However, the normalized efficiency was -1%, which indicates that the transmission efficiency decreased as compared with Belt 3. In Belt 3 provided as a combination of Rubber Composition 2 having a hardness of 90 degrees and Cord 2, the cord had a shrinkage of 0 %. Further, the rate of change of ratio was 2.5 %, which indicates that the transmission ratio changed significantly.
Table 1 summarizes the results of the evaluation.

[Table 1]

|  | Cord | | Rubber | | Rate of Change of Ratio (%) | Normalized Efficiency (%) |
|---|---|---|---|---|---|---|
|  | No. | Shrinkage (%) | Composition | Hardness | | |
| Belt 1 | 1 | 1.5 | 1 | 85 | 1.0 | +2 |
| Belt 2 | 2 | 1.2 | 2 | 90 | 1.0 | -1 |
| Belt 3 | 3 | 0 | 2 | 90 | 2.5 | - |

INDUSTRIAL APPLICABILITY

A double-cogged V-belt according to the present disclosure may reduce a variation in transmission ratio without decreasing the transmission efficiency, and is particularly useful as a transmission belt for a scooter of a medium displacement or less.

DESCRIPTION OF REFERENCE CHARACTERS

100 Double-Cogged V-Belt
110 Cord-Embedded Portion
111 Cord-Embedded Portion Body
112 Cord
120 Lower Cogged Portion
121 Short Fiber
122 Lower Cogged Portion Body
123 Canvas
124 Lower Cog
125 Groove
130 Upper Cogged Portion
131 Short Fiber
134 Upper Cog
135 Groove

**Claims**

1. A double-cogged V-belt (100) comprising:

an endless cord-embedded portion (110) having a cord (112) embedded therein;
a lower cogged portion (120) forming an integral part of the cord-embedded portion (110) on an inner peripheral surface thereof; and
an upper cogged portion (130) forming an integral part of the cord-embedded portion (110) on an outer peripheral surface thereof, wherein **characterized in that**
the cord (112) is comprised of twisted polyester fiber yarns of 6000 dtex or more in thickness, has an outer diameter of 0.8 mm to 1.5 mm and is able to have a shrinkage rate of 1.2 % to 2.0 % when subjected to a thermal treatment at 120 °C for an hour, and
a rubber composition constituting the lower and upper cogged portions (120, 130), that contains respectively short fibers (121,131), such as meta-aramid fibers, and has a hardness of less than 90 degrees, the amount of short fibers (121,131) is from 15 to 25 parts by mass relative to 100 parts by mass of the rubber composition, the short fibers (121,131) having a tensile modulus of elasticity of 5GPa or more, and being oriented such that their grain direction agrees with a belt width direction, and being mixed with, and dispersed in the rubber composition, the thickness of the lower and upper cogged portions (120, 130) being respectively from 5,0 mm to 8,0 mm and from 1,5 mm to 3,5 mm,
such that a rate of change of transmission ratio of 1.0 % or less and a normalized efficiency is -1% or more are obtained, wherein
the rate of change of ratio is represented by the equation (1):

$$\text{Rate of Change of Ratio} = N1/N2((N3/N4)-(N1/N2))/(N1/N2)\times100\cdots\cdots(1)$$

where, when the belt is wrapped around a drive pulley and a driven pulley and the drive pulley is rotated at 5000 rpm and a drive torque of 8 Nm for 200 hours, N1 and N2 respectively represent input and output numbers of revolutions immediately after the start of the rotation, and N3 and N4 respectively represent input and output numbers of revolutions when 200 hours passed since the start of the rotation, and
the normalized efficiency being represented by the equation (2):

$$\text{Normalized efficiency} = (\text{transmission efficiency of the belt - transmission efficiency of a reference belt})/\text{transmission efficiency of a reference belt}\cdots\cdots(2)$$

where the reference belt is a double-cogged V-belt of an identical shape using a cord having a thermal shrinkage of 0, and the transmission efficiency is represented by a formula of (N2 × Tr2) / (N1 × Tr1) × 100, where, when the belt is wrapped around a drive pulley and a driven pulley and the drive pulley is rotated at 3000 rpm and a drive torque of 4 Nm, N1 and N2 respectively represent input and output numbers of revolutions and Tr1 and

7

Tr2 respectively represent input and output torques immediately after the start of the rotation.

2. The double-cogged V-belt of claim 1, wherein
the lower cogged portion (120) has lower cogs,
the upper cogged portion (130) has upper cogs,
an arrangement pitch (P1) of the lower cogs is not more than an arrangement pitch (P2) of the upper cogs,
a ratio (D1/D2) of a cog height (D1) of the lower cogs to a cog height (D2) of the upper cogs is 1.7 or more, and
a ratio (T/TC) of a belt thickness (T) to a distance (TC) between a bottom of each groove of the lower cogged portion (120) and a bottom of an associated groove of the upper cogged portion (130) is 1.5 or more.

3. The double-cogged V-belt of any one of claim 1 or 2, wherein
a ratio (W/T) of a belt width (W) measured at a position corresponding to the middle of the cord (112) in a belt thickness direction to the belt thickness (T) is 1.5 or more and 4.0 or less.

4. The double-cogged V-belt of any one of claims 1-3, wherein
the lower cogged portion (120) includes canvas (123) bonded to a surface thereof.

**Patentansprüche**

1. Doppelt gezahnter V-Riemen (100), umfassend:

einen Endlos-Cordeinbettungsabschnitt (110), der in demselben einen Cord (112) eingebettet aufweist;
einen unteren gezahnten Abschnitt (120), der einen festen Bestandteil des Cordeinbettungsabschnitts (110) an einer Innenumfangsfläche desselben bildet; und
einen oberen gezahnten Abschnitt (130), der einen festen Bestandteil des Cordeinbettungsabschnitts (110) an einer Außenumfangsfläche desselben bildet, wobei **dadurch gekennzeichnet, dass**
der Cord (112) aus verzwirnten Polyesterfasergarnen von 6000 dtex oder mehr in der Dicke besteht, einen Außendurchmesser von 0,8 mm bis 1,5 mm aufweist und in der Lage ist, eine Schrumpfrate von 1,2 % bis 2,0 % aufzuweisen, wenn er eine Stunde lang einer Wärmebehandlung bei 120 °C unterzogen wird, und
eine Gummizusammensetzung, aus der der untere und obere gezahnte Abschnitt (120, 130) bestehen, welche relativ kurze Fasern (121, 131) wie etwa meta-Aramidfasern enthält und eine Härte von weniger als 90 Grad aufweist, wobei die Menge an kurzen Fasern (121, 131) bezogen auf 100 Masseteile der Gummizusammensetzung 15 bis 25 Masseteile beträgt, wobei die kurzen Fasern (121, 131) einen Zugelastizitätsmodul von 5 GPa oder mehr aufweisen und derart ausgerichtet sind, dass ihre Maserungsrichtung mit einer Riemenbreitenrichtung übereinstimmt, und gemischt sind mit und dispergiert sind in der Gummizusammensetzung, wobei die Dicke des unteren und oberen gezahnten Abschnitts (120, 130) jeweils von 5,0 mm bis 8,0 mm und von 1,5 mm bis 3,5 mm beträgt,
derart, dass eine Übertragungsverhältnis-Änderungsrate von 1,0 % oder weniger und eine normierte Effizienz, die -1 % oder mehr beträgt, erhalten werden, wobei
die Verhältnisänderungsrate wiedergegeben wird von der Gleichung (1):

$$\text{Verhältnisänderungsrate} = N1/N2((N3/N4)-(N1/N2))/(N1/N2) \times 100 \qquad (1)$$

worin, wenn der Riemen um eine Antriebsscheibe und eine Abtriebsscheibe herum geschlungen ist und die Antriebsscheibe 200 Stunden lang mit 5000 U/min und einem Antriebsmoment von 8 Nm gedreht wird, N1 und N2 jeweils Eingangs- und Ausgangs-Drehzahlen unmittelbar nach dem Start der Drehung wiedergeben, und N3 und N4 jeweils Eingangs- und Ausgangs-Drehzahlen wiedergeben, wenn 200 Stunden seit dem Start der Drehung vergangen sind, und
die normierte Effizienz von der Gleichung (2) wiedergegeben wird:

$$\text{Normierte Effizienz} = (\text{Übertragungseffizienz des Riemens} - \text{Übertragungseffizienz eines Referenzriemens})/\text{Übertragungseffizienz eines Referenzriemens} \qquad (2)$$

worin der Referenzriemen ein doppelt gezahnter V-Riemen einer identischen Form unter Verwendung eines Cords ist, der eine Wärmeschrumpfung von 0 aufweist, und die Übertragungseffizienz von einer Formel (N2 x Tr2) / (N1 x Tr1) x 100 wiedergegeben wird, worin, wenn der Riemen um eine Antriebsscheibe und eine Abtriebsscheibe herum geschlungen ist und die Antriebsscheibe mit 3000 U/min und einem Antriebsmoment von 4 Nm gedreht wird, N1 und N2 jeweils Eingangs- und Ausgangs-Drehzahlen wiedergeben und Tr1 und Tr2 jeweils Eingangs- und Ausgangsmomente unmittelbar nach dem Start der Drehung wiedergeben.

2. Doppelt gezahnter V-Riemen nach Anspruch 1, wobei

der untere gezahnte Abschnitt (120) untere Zähne aufweist,

der obere gezahnte Abschnitt (130) obere Zähne aufweist,

eine Anordnungsteilung (P1) der unteren Zähne nicht mehr beträgt als eine Anordnungsteilung (P2) der oberen Zähne,

ein Verhältnis (D1/D2) einer Zahnhöhe (D1) der unteren Zähne zu einer Zahnhöhe (D2) der oberen Zähne 1,7 oder mehr beträgt, und

ein Verhältnis (T/TC) einer Riemendicke (T) zu einem Abstand (TC) zwischen einem Boden jeder Nut des unteren gezahnten Abschnitts (120) und einem Boden einer zugehörigen Nut des oberen gezahnten Abschnitts (130) 1,5 oder mehr beträgt.

3. Doppelt gezahnter V-Riemen nach einem der Ansprüche 1 oder 2, wobei

ein Verhältnis (W/T) einer Riemenbreite (W), an einer Stelle gemessen, die der Mitte des Cords (112) in einer Riemendickenrichtung entspricht, zur Riemendicke (T) 1,5 oder mehr und 4,0 oder weniger beträgt.

4. Doppelt gezahnter Keilriemen nach einem der Ansprüche 1-3, wobei

der untere gezahnte Abschnitt (120) Gewebe (123) einschließt, das an eine Fläche desselben geklebt ist.

**Revendications**

1. Courroie en V dentée double (100) comprenant :

une partie à fil câblé incorporé sans fin (110) ayant un fil câblé (112) incorporé dedans ;

une partie dentée inférieure (120) faisant partie intégrante de la partie à fil câblé incorporé (110) sur une surface périphérique intérieure de celle-ci ; et

une partie dentée supérieure (130) faisant partie intégrante de la partie à fil câblé incorporé (110) sur une surface périphérique extérieure de celle-ci, **caractérisée en ce que**

le fil câblé (112) est constitué de fils de fibres de polyester torsadés ayant une épaisseur de 6000 dtex ou plus, a un diamètre extérieur de 0,8 mm à 1,5 mm et peut présenter un taux de retrait allant de 1,2% à 2,0% lorsqu'il est soumis à un traitement thermique à 120° C pendant une heure, et

une composition de caoutchouc constituant les parties dentées inférieure et supérieure (120, 130), qui contient respectivement des fibres courtes (121, 131), telles que des fibres de méta-aramide, et a une dureté inférieure à 90 degrés, la quantité de fibres courtes (121, 131) est de 15 à 25 parties en masse par rapport à 100 parties en masse de la composition de caoutchouc, les fibres courtes (121, 131) ayant un module d'élasticité en traction de 5 GPa ou plus, et étant orientées de sorte que leur sens de grain s'accorde avec le sens de la largeur de courroie, et étant mélangées avec, et dispersées dans la composition de caoutchouc, l'épaisseur des parties dentées inférieure et supérieure (120, 130) étant respectivement de 5,0 mm à 8,0 mm et de 1,5 mm à 3,5 mm, de manière à obtenir une vitesse de variation de rapport de transmission inférieure ou égale à 1,0% et une efficacité normalisée supérieure ou égale à - 1%, où

la vitesse de variation de rapport est représentée par l'équation (1):

$$\text{Vitesse de Variation de Rapport} = N1/N2((N3/N4) - (N1/N2))/(N1/N2)x100 \ ....(1)$$

où, lorsque la courroie est enroulée autour d'une poulie motrice et d'une poulie menée et la poulie motrice tourne à 5000 tr/min et un couple moteur de 8 Nm pendant 200 heures, N1 et N2 représentent respectivement les nombres de tours d'entrée et de sortie immédiatement après le début de la rotation, et N3 et N4 représentent respectivement les nombres de tours d'entrée et de sortie lorsque 200 heures se sont écoulées depuis le début de la rotation, et

l'efficacité normalisée étant représentée par l'équation (2) :

$$\text{Efficacité normalisé} = (\text{efficacité de transmission de la courroie} - \text{efficacité de transmission d'une courroie de référence})/\text{efficacité de transmission d'une courroie de référence} \ldots\ldots (2)$$

où la courroie de référence est une courroie en V dentée double de forme identique utilisant un fil câblé ayant un retrait thermique égal à 0 et l'efficacité de transmission est représentée par la formule (N2 x Tr2) / (N1 x Tr1) x 100, où, lorsque la courroie est enroulée autour d'une poulie motrice et d'une poulie menée et la poulie motrice tourne à 3000 tr/min et un couple moteur de 4 Nm, N1 et N2 représentent respectivement les nombres de tours d'entrée et de sortie et Tr1 et Tr2 représentent respectivement les couples d'entrée et de sortie immédiatement après le début de la rotation.

**2.** Courroie en V dentée double de la revendication 1, dans laquelle
la partie dentée inférieure (120) présente des dents inférieures,
la partie dentée supérieure (130) présente des dents supérieures,
un pas d'agencement (P1) des dents inférieures n'est pas supérieur à un pas d'agencement (P2) des dents supérieures,
un rapport (D1/D2) d'une hauteur de dent (D1) des dents inférieures sur une hauteur de dent (D2) des dents supérieures est supérieur ou égal à 1,7, et
un rapport (T/TC) d'une épaisseur de courroie (T) sur une distance (TC) entre un fond de chaque rainure de la partie dentée inférieure (120) et un fond d'une rainure associée de la partie dentée supérieure (130) est supérieur ou égal à 1,5.

**3.** Courroie en V dentée double de l'une quelconque des revendications 1 et 2, dans laquelle
un rapport (W/T) d'une largeur de courroie (W) mesurée à une position correspondant au milieu du fil câblé (112) dans le sens de l'épaisseur de courroie sur l'épaisseur de courroie (T) est supérieur ou égal à 1,5 et inférieur ou égal à 4,0.

**4.** Courroie en V dentée double de l'une quelconque des revendications 1 à 3, dans laquelle la partie dentée inférieure (120) comporte une toile (123) liée à une surface de celle-ci.

FIG. 1

EP 3 106 712 B1

FIG. 2A

FIG. 2B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004036855 A

- JP 2004036855 B